# EUROPEAN PATENT SPECIFICATION

(11) **EP 1 249 477 B1**
(45) Date of publication and mention of the grant of the patent: **22.12.2004**
(21) Application number: 02007553.7
(22) Date of filing: 03.04.2002
(51) Int. Cl.: C09D 11/14, D06P 1/38, D06P 1/46, C09B 67/00, D06P 1/607

(54) **Print pastes for reactive printing**
Farbpasten für den Reaktivdruck
Pates d'impression pour l'impression rèactive

(30) Priority: 10.04.2001 DE 10117995; 30.05.2001 DE 10126197
(43) Date of publication of application: 16.10.2002
(73) Proprietor: Cognis Deutschland GmbH & Co. KG, 40589 Düsseldorf (DE); LAMBERTI S.p.A., 21041 Albizzate (Varese) (IT)
(72) Inventor: Horlacher, Peter, Dr., 89287 Bellenberg (DE); Roth, Armin, 89287 Bellenberg (DE); Schneider, Reinhold, Dr., 70597 Stuttgart (DE); Frick, Sabine, 70806 Kornwestheim (DE); Pfeiffer, Ugo, Dr., 20149 Milan (IT); Sostar Turk, Sonja, Dr., 2000 Maribor (SI); Kokol, Vanja Ptuij, 2250 Ptuj (SI); Blank, Karl Hans, 65835 Liederbach (DE); Plajnsek, Peter, 2000 Maribor (SI); Sanchez-Leal, Joaquim, Dr., 08034 Barcelona (ES); Petrinic, Irena, 2000 Maribor (SI)
(74) Representative: Reinhardt, Jürgen, Dr.

(56) References cited:
- EP-A- 0 601 403
- EP-A- 0 864 621
- US-A- 5 766 267

## Description

The present application relates to a print paste for reactive printing, a process for reactive printing and the use of a print paste for reactive printing.

Reactive print pastes are customarily thickened with sodium alginates or their mixtures with carboxymethylated polysaccharides. These thickeners provide good rheological properties at comparatively low solids contents and the softest hand among natural and biodegradable thickeners. These positive properties notwithstanding, however, these thickeners still have free hydroxyl groups which can lead to harshening especially when bifunctional reactive dyes (Reactive Black 5 for example) on strongly swelling cellulose substrates (viscose). Since the trend is clearly in the direction of multiple attachment dyes (to increase the fixation yield), it is more and more frequently necessary to use synthetic thickenings based on polymeric acids as alternatives, with which these hand problems do not arise.

These synthetic thickeners, however, have a serious disadvantage in that, unlike natural thickeners, they are refractory (slow to biodegrade) and contaminate the effluent. Moreover, these thickener types are relatively electrolyte sensitive and produce fuzzy contours. Owing to these serious disadvantages, there is inevitably a large demand for biodegradable polysaccharidic thickeners. However, for them to be used successfully in reactive printing it is necessary to suppress the chemical reaction between polysaccharidic hydroxyl groups and reactive dyes.

In principle, fabric hand can be improved by using substituted natural thickeners (carboxymethylated thickeners for example), but at the same time the biodegradability of the thickener decreases with increasing substitution. Furthermore, such highly substituted guar thickeners do not provide the fabric hand obtainable with polyacrylates and alginates.

It is an object of the present invention to solve the problems described above.

The present invention provides in a first embodiment a pasty preparation for reactive printing, containing at least
A) a thickener based on polysaccharides
B) an additive selected from the group consisting of B1) the saturated and/or unsaturated ethoxylates of fatty alcohols, fatty amines and fatty acids having a degree of alkoxylation of 6 to 20
C) a reactive dye and
D) an alkaline colour fixative and optionally
E) urea.

The thickeners A) are selected polysaccharides which are useful as thickeners. Polysaccharide is the collective term for macromolecular carbohydrates whose molecules consist of a large number (at least >10, but usually appreciably more) glycosidically linked monosaccharide molecules (glycose). Polysaccharides include in particular the important storage biopolymers starch and glycogen and also the structural polysaccharide cellulose, which like dextran and tunicin may all be considered as a polycondensation product of D-glucose (polyglucosans, glucans), inulin as a polycondensate of D-fructose (polyfructosan, fructan), chitin, alginic acid and others. Whereas the polysaccharides mentioned each contain only one kind of building block, albeit possibly in varying glycosidic linkage, the heteropolysaccharides or heteroglycans, which occur in gums, mucilages and connective tissue in particular, consist of various kinds of monomer units.

Preferred polysaccharides useful as thickeners in the subject print pastes are selected from the group of the alginates and of the unsubstituted and/or substituted galactomannans, preferably from the group of the guar derivatives and very particularly preferably are mixtures of the alkoxylated and carboxymethylated species with alginates.

Alginates, as will be known, are the salts of alginic acid. Alginic acid is extracted from algae using sodium carbonate solution. The resultant sodium alginate solution is purified and can then be further used. Guar and its derivatives are likewise known compounds. They are derivatives of guar flour. Guaran, the main constituent of guar flour, is a polysaccharide which can be derivatized in various ways, for example by partial esterification or etherification of its hydroxyl groups.

It is preferable to use (1:1) alginate : guar mixtures and very particularly preferably (30:70) alginate : guar as thickeners in reactive printing for this process. The thickeners under A) have a degree of substitution between 0-1, preferably between 0-0.4. The substituents are alkyl ethers, preferably O-CH₂CH₂OH, O-CH₂CHOHCH₃ and very particularly preferably O-CH₂COOH.

The solids content of the thickeners is preferably < 100 g/ kg of paste, and very particular preference is given to the use of such thickeners as provide adequate paste viscosity at just 60 g/kg. The viscosity values of such pastes are preferably 5-10 Pas at a shear rate of 10 sec⁻¹, as measured with a rotary viscometer.

Even more suitable are those thickeners having an even lower solids content (down to about 10 g/kg) which provide the softest hand. It is also possible to use alginates having a high, medium or low solids content.

Additives B) according to the invention include the alkoxylated derivatives of fatty alcohols, fatty amines and fatty acids, preferably those having a degree of alkoxylation between 6 and 20 and very particularly preferably those having 8 to 14 ethylene oxide units per molecule.

Particular preference is given to ethoxylated fatty alcohols. Fatty alcohols are primary aliphatic alcohols of the formula R¹-OH, where R¹ is an aliphatic, linear or branched hydrocarbyl radical having 6 to 22 carbon atoms and 0 and/or 1, 2 or 3 double bonds. Typical examples are hexyl alcohol, caprylic alcohol, 2-ethylhexyl alcohol, decyl alcohol, lauryl alcohol, isotridecyl alcohol, myristyl alcohol, cetyl alcohol, palmoleyl alcohol, stearyl alcohol, isostearyl alcohol, oleyl alcohol, elaidyl alcohol, petroselinyl alcohol, linolyl alcohol, linolenyl alcohol, elaeostearyl alcohol, arachyl alcohol, gadoleyl alcohol, behenyl alcohol, erucyl alcohol and brassidyl alcohol and also their technical grade mixtures which are obtained for example in the high pressure hydrogenation of technical grade methyl esters based on fats and oils or aldehydes from Roelen's oxo process and also as monomer fractions in the dimerization of unsaturated fatty alcohols.

Preference is given to technical grade fatty alcohols of 12 to 18 carbon atoms, for example coconut, palm, palm-kernel or tallow fat alcohol. These are converted by conventional methods under pressure and in the presence of gaseous alkoxides, preferably ethylene oxide, and acidic or alkaline catalysts into the desired alkoxylates. Alkoxylated fatty acids or amides are likewise known compounds. For the structure and preparation of these materials, reference is made to pertinent surveys, for example J. Falbe (ed.), "Surfactants in Consumer Products", Springer Verlag, Berlin, 1987, pages 54-124, or J. Falbe (ed.), "Katalysatoren, Tenside und Mineralöladditive", Thieme Verlag, Stuttgart, 1978, pages 123-217.

For the purposes of the present technical teaching, preference is given to using ethoxylated fatty alcohols whose alkyl chain contains 16 to 18 carbon atoms, and the derivatives containing between 8 and 14 ethylene oxide units in the molecule are particularly advantageous.

Useful reactive dyes (component C) for the process of the invention may be monofunctional as well as polyfunctional. The process is preferably useful for hand improvement with polyfunctional reactive dyes, but is also suitable in particular for hand improvement with monofunctional reactive dyes.

The print pastes may optionally further include urea (component E) and further textile auxiliaries (component F) which cause no adverse effects on the fabric hand in the process of the invention.

The necessary fixing alkali (component D) can be NaHCO₃ and also Na₂CO₃, sodium silicate and NaOH in the customary concentrations. The printing process can be carried out not only in one phase but also in two phases under saturated steam and HT conditions.

The print paste of the invention preferably contains
0.1 to 30% by weight of component A)
0.1 to 30% by weight of component B), preferably 1.5-5% by weight
0.1 to 20% by weight of component C), preferably 3-5% by weight
0.1 to 20% by weight of component D), preferably 3-5 % by weight
0 to 15% by weight of component E), preferably 8-12 % by weight and water in amounts from 1 to 99 % by weight.

It is prepared in a conventional manner by mixing the individual constituents, the additive component preferably being admixed last.

The present invention further provides a single- and two-phase printing process on cellulosic material, preferably viscose, wherein a print paste according to the above description is applied to the cellulosic material and subsequently fixed thermally or by the action of IR or microwave radiation. The process described according to the invention is useful for cellulosic materials and can be used on regenerated cellulose in particular. In addition, the effluents (print wash-off) of the process according to the invention are substantially more biodegradable than those from polyacrylates and this process accordingly makes a substantial contribution to ecological improvement in reactive printing.

The resulting print is very substantially equivalent to the results of reactive printing with known alginates and synthetic thickeners with regard to fabric hand, depth of shade and print quality. In addition, an improved fabric hand is obtained even compared with conventional alginates and polyacrylic acid thickeners.

The present application further provides for the use of the above-identified print pastes for reactive printing on cellulosic material.

### Examples

The process of the invention will now be more particularly described using some polysaccharidic thickeners and some commercial products as examples.

To prepare the print paste, the needed amount of thickener (type and use level see Table 1) was dissolved in cold demineralized water by vigorous stirring. Stirring for 15 minutes provided a viscous solution which was mixed, by continued stirring, with the necessary amount of dye (0.1-15%, see Tables 3 to 4) and alkali (3% of NaHCO₃) and also the additives (Table 2) in the amounts reported in Tables 3 to 4 and further textile auxiliaries (1% of Ludigol for example) and also urea (10%). This print paste was kept in a refrigerator overnight to ensure complete swelling and stirred for another 10 min before use.

**Table 1:**

| Examples of usable thickeners | | | | |
|---|---|---|---|---|
| Thickener | Manufacturer | Type | DS | Use level g/kg |
| Lameprint DX9 | Grünau | guar | 0 | 57 |
| Lameprint CG-8 | Grünau | carboxymethylguar | 0.2 | 55 |
| CM-Guar L22734 | Grünau | carboxymethylguar | 0.4 | 55 |
| Lameprint A13 | Grünau | carboxymethylguar | 1.1 | 52 |
| Diagum CWCS02 | Diamalt | carboxymethylcassia | 0.2 | 23 |
| Alginat LV | Lamberti | alginate | - | 48 |
| Lamitex LV | Pronova | alginate | - | 38 |

**Table 2:**

| Examples of usable additives | |
|---|---|
| Abbreviation | Additive designation, type |
| Additive 1 | Decaethylene glycol octadecyl ether (Brij 76) |
| Additive 2 | Octaethylene glycol octadecyl ether |
| Additive 3 | Dodecylethylene glycol octadecyl ether |
| Additive 4 | Eicosaethylene glycol octadecyl ether (Brij 78) |
| Additive 5 | Decaethylene glycol hexadecyl ether (Brij 56) |
| Additive 6 | Hexaethylene glycol oleyl ether |
| Additive 7 Comparative | (C16-C18)-Alkyl ether sodium carboxylate |
| Additive 8 Comparative | Sodium alkylpolyglycoside sulphosuccinate |
| Additive 9 | Decaethylene glycol oleyl ether (Brij 96) |
| Additive 10 Comparative | Diethylene glycol cocosamine |

The screen prints were carried out on print-pretreated cotton renforcé (135 g/m²) and viscose (110 g/m²) using a Zimmer laboratory printing machine. The squeegee used had a diameter of 1 cm, it was moved across the screen once and the average print paste add-on used was 70-120 g/m² (the perceived depth of shade results from the amount of paste applied). The printed pattern was dried at 40°C for 5 min and then fixed with saturated steam for 10 min. The print was aftertreated by washing it with demineralized water at 95°C for 20 min, air dried and ironed. As can be seen from the print results in Tables 3 to 4, the use of the additives described according to the invention leads to a reduction in the bending stiffness values of the print patterns, which is equivalent to an improvement in fabric hand.

**Table 3:**

| Print results on Novalis viscose | | | | |
|---|---|---|---|---|
| Thickener | Additive | Dye | Depth of shade (K/S) | Bending stiffness [mN*cm²] |
| Alginat LV | without additive | 5% R.Black 5 | 30.4 | 1.4 |
| Alginat LV | 1% additive 1 | 5% R.Black 5 | 30.4 | 0.97 |
| Lamitex LV | without additive | 5% R.Black 5 | 33.8 | 4.2 |
| Lamitex LV | 1% additive 1 | 5% R.Black 5 | 34.2 | 1.8 |
| Lameprint DX9 | without additive | 5% R.Black 5 | 23.2 | 21.1 |
| Lameprint DX9 | 1% additive 1 | 5% R.Black 5 | 21.3 | 11.8 |
| Lameprint DX9 | 3% additive 1 | 5% R.Black 5 | 22.5 | 10.8 |
| Lameprint DX9 | 5% additive 1 | 5% R.Black 5 | 21.0 | 4.5 |
| Lameprint DX9 (2-phase print) | 5% additive 1 | 5% R.Black 5 | 21.5 | 2.4 |
| Lameprint DX9 | 5% additive 2 | 5% R.Black 5 | 21.1 | 3.9 |
| Lameprint DX9 | 5% additive 3 | 5% R. Black 5 | 22.6 | 3.3 |
| Lameprint DX9 | 1% additive 4 | 5% R.Black 5 | 24.3 | 11.2 |
| Lameprint DX9 | 5% additive 5 | 5% R.Black 5 | 23.8 | 5.0 |
| Lameprint CG8 | 5% additive 6 | 5% R.Black 5 | 25.7 | 3.9 |
| Lameprint DX9 | 5% additive 7 | 5% R.Black 5 | 19.6 | 5.5 |
| Lameprint DX9 | 5% additive 8 | 5% R.Black 5 | 23.5 | 7.9 |
| Lameprint DX9 | 5% additive 9 | 5% R.Black 5 | 20.35 | 7.0 |
| Lameprint DX9 | 5% additive 10 | 5% R.Black 5 | 22.2 | 5.7 |
| Lameprint DX9 | 5% additive 1 | 5% R.Red 2 | 20.0 | 3.3 |
| Lameprint DX9 | 5% additive 1 | 5% R.Red 120 | 19.5 | 3.7 |
| Lameprint DX9 | 5% additive 1 | 5% R.Red 35 | 26.4 | 2.1 |
| Lameprint DX9 | 5% additive 1 | 5% R.Blue 4 | 18.8 | 2.4 |
| Lameprint DX9 | 5% additive 1 | 5% R.Blue 170 | 22.6 | 2.2 |
| Lameprint DX9 : Alginat LV (50:50) | 5% additive 1 | 5% R.Black 5 | 21.9 | 3.4 |
| Lameprint DX9 : Alginat LV (70:30) | 1.5% additive 1 | 5% R.Black 5 | 24.2 | 2.6 |
| Lameprint DX9 : Alginat LV (70:30) | 3% additive 1 | 5% R.Black 5 | 24.0 | 1.8 |
| Lameprint DX9 : Alginat LV (70:30) | 5% additive 1 | 5% R.Black 5 | 22.3 | 1.4 |
| Lamiprint CG-8 | 5% additive 1 | 5% R.Black 5 | 24.0 | 4.4 |
| Lameprint CG-8 (2-phase print) | 5% additive 1 | 5% R.Black 5 | 23.0 | 2.6 |
| CM-guar L22734 | 5% additive 1 | 5% R.Black 5 | 23.0 | 3.7 |
| CM-guar L22734 (2-phase print) | 5% additive 1 | 5% R.Black 5 | 23.1 | 1.7 |
| Lameprint A13 | 5% additive 1 | 5% R.Black 5 | 21.3 | 3.1 |
| Diagum CWCS02 | - | 5% R.Black 5 | 22.8 | 9.9 |
| Diagum CWCS02 | 3% additive 1 | 5% R.Black 5 | 23.0 | 7.5 |

**Table 4:**

| Further examples of print results on Javanese viscose with additive 1 | | | | |
|---|---|---|---|---|
| Thickener | Additive | Dye | Depth of shade (K/S) | Bending stiffness [mN*cm ² ] |
| Alginat LV | without additive | 5% R.Black 5 | 33.4 | 1.3 |
| Alginat LV | 1% additive 1 | 5% R.Black 5 | 31.9 | 0.9 |
| Alginat LV | 3% additive 1 | 5% R.Black 5 | 33.5 | 0.8 |
| Lamitex LV | without additive | 5% R.Black 5 | 32.1 | 3.5 |
| Lamitex LV | 1% additive 1 | 5% R.Black 5 | 33.1 | 1.0 |
| Lameprint DX9 | without additive | 5% R.Black 5 | 20.0 | 14.7 |
| Lameprint DX9 | 1% additive 1 | 5% R.Black 5 | 19.8 | 10.7 |
| Lameprint DX9 | 3% additive 1 | 5% R.Black 5 | 22.3 | 7.8 |
| Lameprint DX9 | 5% additive 1 | 5% R.Black 5 | 21.9 | 5.0 |
| Lameprint DX9 | 3% additive 1 | 5% Levafix Golden Yellow PN | 28.5 | 2.3 |
| Lameprint DX9 | 3% additive 1 | 5% Levafix Orange PN | 30.8 | 2.6 |
| Lameprint DX9 | 3% additive 1 | 5% Levafix Blue PN-4R | 29.3 | 2.0 |
| Lameprint DX9 | 3% additive 1 | 5% Levafix Red PN-FB | 31.1 | 3.2 |
| Lameprint DX9 | 3% additive 1 | 5% Levafix Brown PN-2R | 27.8 | 2.6 |
| Lameprint DX9 | 3% additive 1 | 5% Levafix Black PN-GR | 23.0 | 6.3 |
| Lameprint DX9 : Alginat LV (50:50) | 1% additive 1 | 5% R.Black 5 | 27.8 | 4.4 |
| Lameprint DX9 : Alginat LV (50:50) | 3% additive 1 | 5% R.Black 5 | 23.9 | 3.4 |
| Lameprint DX9 : Alginat LV (50:50) | 5% additive 1 | 5% R.Black 5 | 22.3 | 3.1 |
| Lameprint CG-8 | 5% additive 1 | 5% R.Black 2 | 25.3 | 5.2 |

## Claims

1. Pasty preparation for reactive printing, containing at least
A) a thickener based on polysaccharides
B) an additive selected from the group consisting of
the saturated and/or unsaturated ethoxylated fatty alcohols, fatty amines and fatty acids having a degree of alkoxylation of 6 to 20
C) a reactive dye and
D) an alkaline colour fixative.

2. Preparation according to Claim 1, **characterized in that** urea is additionally present as component E).

3. Preparation according to Claims 1 and/or 2, **characterized in that** further textile auxiliaries, preferably plasticizers, are additionally present as component F).

4. Preparation according to Claims 1 to 3, **characterized in that** component A) is selected from the group of the alkoxylated unsubstituted polysaccharides.

5. Preparation according to Claims 1 to 4, **characterized in that** component A) is selected from the group of the carboxymethylated polysaccharides.

6. Preparation according to Claims 1 to 5, **characterized in that** component A) is selected from the group of the unsubstituted and/or substituted galactomannans.

7. Preparation according to Claims 1 to 6, **characterized in that** component A) is selected from the group of the alginates.

8. Preparation according to Claims 1 to 7, **characterized in that** component A) contains mixtures of alginates and carboxymethylated polysaccharides and/or alkoxylated unsubstituted polysaccharides.

9. Preparations according to Claim 8, **characterized in that** the alginates and the alkoxylated and/or carboxymethylated thickeners are present in amount ratios of 1:1 to 1:3.

10. Preparation according to Claims 1 to 10, **characterized in that** component B1) is selected from alkoxylated compounds having 8 to 14 ethylene oxide units per molecule.

11. Preparation according to Claims 1 to 10, **characterized in that** it contains, in each case based on the weight of the preparation,
0.1 to 30% by weight of component A)
0.1 to 30% by weight of component B), preferably 1.5-5% by weight
0.1 to 20% by weight of component C), preferably 3-5% by weight
0 to 20% by weight of component D), preferably 10% by weight
0 to 10% by weight of component E).

12. Preparation according to Claims 1 to 11, **characterized in that** it contains 0-5% by weight of a softening component F).

13. Single- and two-phase printing process on cellulosic material, preferably viscose, wherein a print paste according to Claims 1 to 12 is applied to the cellulosic material and subsequently fixed thermally or by the action of IR or microwave radiation.

14. Use of pasty preparations according to Claims 1 to 12 for reactive printing on cellulosic material.

## Patentansprüche

1. Pastenförmige Zubereitung für den Reaktivdruck, enthaltend mindestens
A) ein Verdickungsmittel auf Basis von Polysacchariden
B) ein Additiv, ausgewählt aus der Gruppe
der gesättigten und/oder ungesättigten ethoxylierten Fettalkohole, Fettamine und Fettsäuren mit einem Alkoxylierungsgrad von 6 bis 20 ,
C) einen Reaktivfarbstoff und
D) ein alkalisches Mittel zur Farbfixierung

2. Zubereitung nach Anspruch 1, **dadurch gekennzeichnet, dass** zusätzlich Harnstoff als Komponente E) enthalten ist.

3. Zubereitung nach den Ansprüchen 1 und/oder 2, **dadurch gekennzeichnet, dass** zusätzlich weitere Textilhilfsmittel, vorzugsweise Weichmacher als Komponente F) enthalten sind.

4. Zubereitung nach den Ansprüchen 1 bis 3, **dadurch gekennzeichnet, dass** die Komponente A) ausgewählt ist aus der Gruppe der alkoxylierten unsubstituierten Polysaccharide.

5. Zubereitung nach den Ansprüchen 1 bis 4, **dadurch gekennzeichnet, dass** die Komponente A) ausgewählt ist aus der Gruppe der carboxymethylierten Polysaccharide.

6. Zubereitung nach den Ansprüchen 1 bis 5, **dadurch gekennzeichnet, dass** die Komponente A) ausgewählt ist aus der Gruppe der unsubstituierten und/oder substituierten Galaktomanane.

7. Zubereitung nach den Ansprüchen 1 bis 6, **dadurch gekennzeichnet, dass** die Komponente A) ausgewählt ist aus der Gruppe der Alginate.

8. Zubereitung nach den Ansprüchen 1 bis 7, **dadurch gekennzeichnet, dass** die Komponente A) Mischungen enthält aus Alginaten und carboxymethylierten Polysaccharide und/oder alkoxylierten unsubstituierten Polysacchariden.

9. Zubereitungen nach Anspruch 8, **dadurch gekennzeichnet, dass** die Alginate und die alkoxylierten- und/oder carboxymethylierten Verdicker in Mengenverhältnissen von 1 : 1 bis 1 : 3 enthalten sind.

10. Zubereitung nach den Ansprüchen 1 bis 10, **dadurch gekennzeichnet, dass** als Komponente B1) alkoxylierte Verbindungen mit 8 bis 14 Einheiten Ethylenoxid pro Molekül ausgewählt sind.

11. Zubereitung nach den Ansprüchen 1 bis 10, **dadurch gekennzeichnet, dass** sie jeweils bezogen auf das Gewicht der Zubereitung
0,1 bis 30 Gew.-% der Komponente A)
0,1 bis 30 Gew.-% der Komponente B), bevorzugt 1,5-5 Gew.-%
0,1 bis 20 Gew.-% der Komponente C), bevorzugt 3-5 Gew.-%
0 bis 20 Gew.-% der Komponente D), bevorzugt 10 Gew.-%
0 bis 10 Gew.-% der Komponente E)
enthalten.

12. Zubereitung nach den Ansprüchen 1 bis 11, **dadurch gekennzeichnet, dass** 0-5 Gew.-% einer weichmachenden Komponente F) enthalten

13. Ein- und zweiphasiges Druckverfahren auf cellulosischem Material, vorzugsweise Viskose, wobei einen Druckpaste gemäß der Ansprüche 1 bis 12 auf das cellulosische Material aufgebracht und anschließend thermisch oder durch Einwirkung von IR- oder Mikrowellenstrahlung fixiert wird.

14. Verwendung von pastenförmigen Zubereitungen gemäß den Ansprüchen 1 bis 12 zum Reaktivdruck auf cellulosischem Material.

## Revendications

1. Préparation pâteuse pour impression réactive, contenant au moins
A) un épaississant à base de polysaccharides
B) un additif choisi dans le groupe constitué par
les alcools gras éthoxylés saturés et/ou insaturés, les amines grasses et les acides gras ayant un degré d'alcoxylation de 6 à 20
C) un colorant réactif et
D) un fixateur de couleur alcalin.

2. Préparation selon la revendication 1,
**caractérisée en ce que**
l'urée est présente additionnellement comme composant E).

3. Préparation selon les revendications 1 et/ou 2,
**caractérisée en ce que**
d'autres auxiliaires textiles, de préférence des plastifiants, sont additionnellement présents comme composant F).

4. Préparation selon les revendications 1 à 3,
**caractérisée en ce que**
le composant A) est choisi dans le groupe des polysaccharides non substitués alcoxylés.

5. Préparation selon les revendications 1 à 4,
**caractérisée en ce que**
le composant A) est choisi dans le groupe des polysaccharides carboxyméthylés.

6. Préparation selon les revendications 1 à 5,
**caractérisée en ce que**
le composant A) est choisi dans le groupe des galactomannanes non substitués et/ou substitués.

7. Préparation selon les revendications 1 à 6,
**caractérisée en ce que**
le composant A) est choisi dans le groupe des alginates.

8. Préparation selon les revendications 1 à 7,
**caractérisée en ce que**
le composant A) contient des mélanges d'alginates et de polysaccharides carboxyméthylés et/ou des polysaccharides non substitués alcoxylés.

9. Préparations selon la revendication 8,
**caractérisées en ce que**
les alginates et les épaississants alcoxylés et/ou carboxyméthylés sont présents dans des rapports de quantité de 1:1 à 1:3.

10. Préparation selon les revendications 1 à 9,
**caractérisée en ce qu'**
un composant B1) est choisi parmi les composés alcoxylés ayant de 8 à 14 unités d'oxyde d'éthylène par molécule.

11. Préparation selon les revendications 1 à 10,
**caractérisée en ce qu'**
elle contient, dans chaque cas par rapport au poids de la préparation, 0,1 à 30 % en poids du composant A),
0,1 à 30 % en poids du composant B), de préférence de 1,5 à 5 % en poids
0,1 à 20 % en poids du composant C), de préférence de 3 à 5 % en poids
0 à 20 % en poids du composant D), de préférence de 10 % en poids
0 à 10 % en poids du composant E).

12. Préparation selon les revendications 1 à 11,
**caractérisée en ce qu'**
elle contient 0 à 5 % en poids d'un composant assouplissant F).

13. Procédé d'impression à simple phase et à deux phases sur un matériau cellulosique, de préférence la viscose, dans lequel une pâte d'impression selon les revendications 1 à 12 est appliquée sur le matériau cellulosique et ensuite fixée thermiquement ou par l'action de rayonnements IR ou micro-onde.

14. Utilisation de préparations pâteuses selon les revendications 1 à 12, pour l'impression réactive sur un matériau cellulosique.
